# EUROPÄISCHE PATENTSCHRIFT

(11) **EP 1 609 634 B1**
(45) Veröffentlichungstag und Bekanntmachung des Hinweises auf die Patenterteilung: **18.08.2010**
(21) Anmeldenummer: 05013570.6
(22) Anmeldetag: 23.06.2005
(51) Int. Cl.: B60G 17/027, B60G 21/055, B60G 11/20

(54) **Fahrwerk für Kraftfahrzeuge und Niveauregulierungssystem**
Chassis for motor vehicles and level control system
Chassis pour véhicule à moteur et système de régulation de niveau

(30) Priorität: 24.06.2004 DE 102004030468
(43) Veröffentlichungstag der Anmeldung: 28.12.2005
(73) Patentinhaber: GM Global Technology Operations, Inc., Detroit, MI 48265-3000 (US)
(72) Erfinder: Siebeneick, Jürgen, 55430 Oberwesel (DE)
(74) Vertreter: Daniel, Ulrich W.P.

(56) Entgegenhaltungen:
- EP-A- 0 382 633
- DE-A1- 2 104 458
- FR-A- 1 489 223
- FR-A- 2 063 638
- JP-A- 63 025 119
- US-A- 747 932
- US-A- 2 556 630
- US-A- 3 158 365
- US-A- 3 430 978
- US-A- 5 362 094
- US-A1- 2004 090 019
- US-B1- 6 354 607
- PATENT ABSTRACTS OF JAPAN Bd. 1996, Nr. 05, 31. Mai 1996 (1996-05-31) & JP 08 011516 A (ISUZU MOTORS LTD), 16. Januar 1996 (1996-01-16)

## Beschreibung

Die Erfindung betrifft ein Fahrwerk für ein Kraftfahrzeug mit den Merkmalen des Oberbegriffs des Patentanspruchs 1.

Zur Verbesserung des Fahrkomforts wurden in der Vergangenheit Fahrwerke von Kraftfahrzeugen zunehmend weiterentwickelt. So sind aus dem Stand der Technik aktive Fahrwerke bekannt, wobei bei solchen aktiven Fahrwerken zwei oder mehrere Fahrwerksysteme automatisch über einen Regelkreis an die jeweiligen Fahrbedingungen angepasst werden. Bei den mithilfe eines aktiven Fahrwerks anpassbaren Fahrzeugsystemen handelt es sich zum Beispiel um Dämpfungssysteme, Federungssysteme, Niveauregulierungssysteme und/oder Stabilisierungssysteme des Fahrwerks.

Aus dem Stand der Technik sind Fahrwerke für Kraftfahrzeuge bekannt, die einen geteilten oder nichtgeteilten Stabilisator aufweisen. Mit dem Stabilisator wirkt eine Stelleinrichtung zur Gewährleistung einer Niveauänderung des Kraftfahrzeugs zusammen.

Fahrwerke für Kraftfahrzeuge mit nichtgeteilten Stabilisatoren und Stelleinrichtungen sind aus der JP 63 025119 A, US 2004/090019 A1 und US-A-5 362 094 bekannt. Bei dem in der JP 63 025119 A beschriebenen Fahrwerk ist die Stelleinrichtung zwischen dem Stabilisator und dem Rad wirksam.

Fahrwerke für Kraftfahrzeuge mit geteilten Stabilisatoren und Stelleinrichtungen sind in den Druckschriften JP 08 011516 A, FR-A-2 063 638, EP-A-0 382 633 und FR-A-1 489 223 beschrieben. Der in der JP 08 011516 A und der FR-A-1 489 223 gezeigte Stabilisator ist mittig geteilt, weist somit zwei Elemente auf. Bei den in der FR-A-2 063 638 und EP-A-0 382 633 veranschaulichten geteilten Stabilisatoren sind die beiden Elemente des jeweiligen Stabilisators verlängert, so dass sich die Elemente über die gesamte Breite zwischen zwei Rädern erstrecken. Bei den vorstehend diskutierten geteilten Fahrwerken ist das jeweilige Element mit einem ersten Ende über jeweils eine Stelleinrichtung an der Karosserie des Kraftfahrzeugs angelenkt und es ist ein zweites Ende des jeweiligen Elements über eine Stange mit einem Rad des Fahrwerks gelenkig verbunden.

Hiervon ausgehend liegt der vorliegenden Erfindung das Problem zu Grunde, ein neuartiges Fahrwerk für ein Kraftfahrzeug zu schaffen.

Dieses Problem wird durch die Merkmale des Patentanspruchs 1 gelöst.

Der Stabilisator ist zur Bildung zweier Elemente mit Drehfedereigenschaften geteilt bzw. unterbrochen, wobei jedes Element mit einem ersten Ende an einer Karosserie des Kraftfahrzeugs angelenkt ist, und wobei zweite Enden der Elemente über jeweils eine Stelleinrichtung mit jeweils einem Rad, insbesondere mit einer dem jeweiligen Rad zugeordneten Federungseinrichtung, gelenkig verbunden sind.

Nach einer vorteilhaften Weiterbildung des Fahrwerks sind die Stelleinrichtungen jeder Radaufhängungseinrichtung mit einer Steuer- bzw. Regeleinrichtung verbunden, die als Ausgangsgrößen Stellsignale für die Stelleinrichtungen erzeugt. Die Steuer- bzw. Regeleinrichtung ist mit Sensoren, insbesondere mit Höhensensoren, Geschwindigkeitssensoren und Beschleunigungssensoren verbunden, deren Messwerte Eingangsgrößen für die Steuer- bzw. Regeleinrichtung sind. Die Steuer- bzw. Regeleinrichtung bewirkt durch eine entsprechende Ansteuerung der Stelleinrichtungen einen Nickausgleich und/oder Wankausgleich am Kraftfahrzeug.

Bevorzugte Weiterbildungen der Erfindung ergeben sich aus den abhängigen Unteransprüchen und der nachfolgenden Beschreibung.

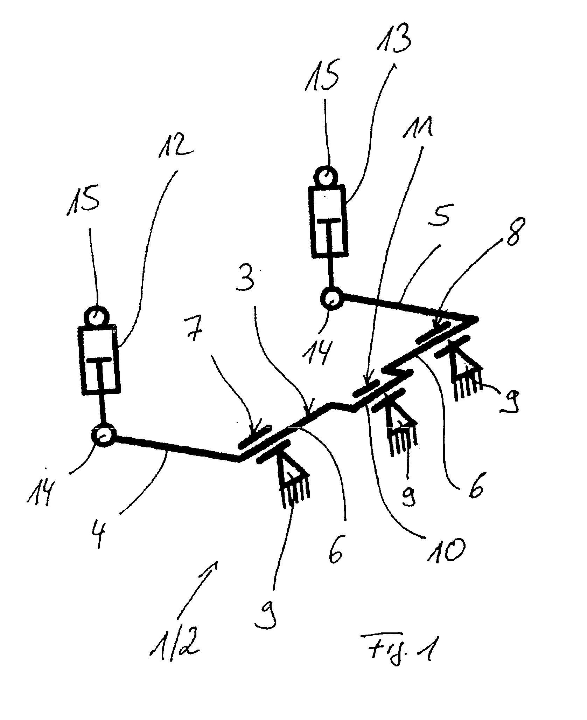

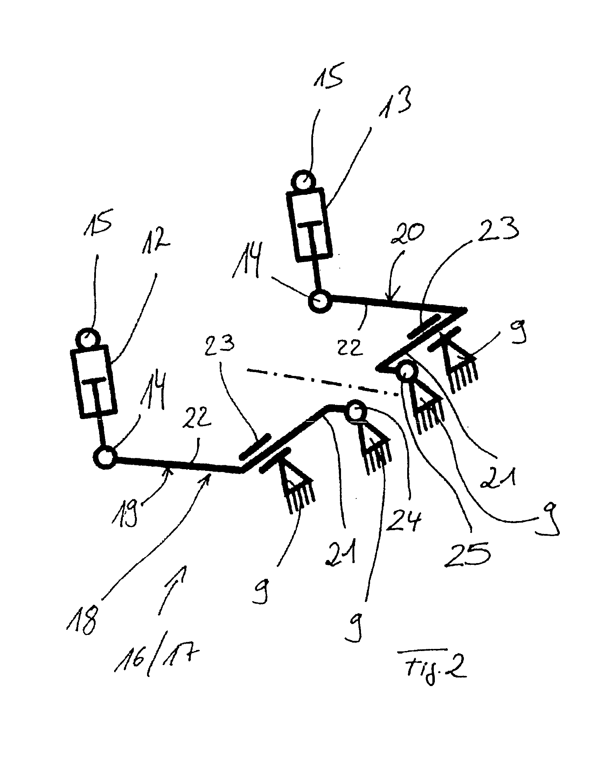

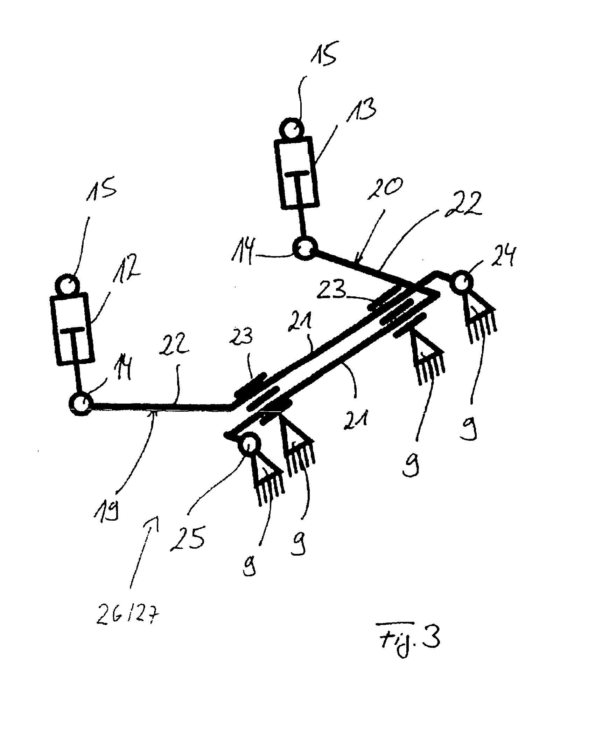

Nachfolgend wird ein Ausführungsbeispiel der Erfindung, ohne hierauf beschränkt zu sein, unter Bezugnahme auf die Zeichnung näher erläutert. Es wird ausdrücklich darauf hingewiesen, dass nur zum besseren Verständnis des in der Figur 3 veranschaulichten Ausführungsbeispieles der Erfindung die nicht Gegenstand der Erfindung bildenden Beispiele gemäß der Figuren 1 und 2 mitdargestellt sind. In der Zeichnung zeigt:
- Figur 1: eine stark schematisierte Darstellung eines Fahrwerks im Bereich einer Vorderradaufhän- gungseinrichtung für ein Ausführungsbei- spiel,
- Figur 2: eine stark schematisierte Darstellung eines Fahrwerks im Bereich einer Vorderradaufhän- gungseinrichtung nach einem weiteren Ausfüh- rungsbeispiel,
- Figur 3: eine stark schematisierte Darstellung des erfindungsgemäßen Fahrwerks im Bereich einer Vorderradaufhängungseinrichtung.

Nachfolgend wird die Erfindung unter Bezugnahme auf die Figuren 1 bis 3 in größerem Detail beschrieben:
Fig. 1 zeigt einen stark schematisierten Ausschnitt aus einem Fahrwerk 1 nach einem ersten Ausführungsbeispiel im Bereich einer Vorderradaufhängung. Fig. 1 zeigt demnach eine Radaufhängungseinrichtung 2 für die beiden Vorderräder des Kraftfahrzeugs. Gemäß Fig. 1 umfasst die Radaufhängungseinrichtung 2 einen Stabilisator 3, der sich zwischen zwei nicht-dargestellten, aufzuhängenden Vorderrädern erstreckt. Der Stabilisator 3 verfügt über eine im Wesentlichen U-förmige Gestalt. Der Stabilisator 3 besteht demnach im Wesentlichen aus drei Abschnitten, wobei zwei Schenkel 4 und 5 in etwa parallel zueinander verlaufen und durch einen Abschnitt 6 miteinander verbunden sind. Der Abschnitt 6 des Stabilisators 3, der die parallel verlaufenden Schenkel 4 und 5 miteinander verbindet, ist in Drehlagern 7 und 8 geführt, wobei gemäß Fig. 1 die Drehlager 7 und 8 mit einer Karosserie des Kraftfahrzeugs fest verbunden sind. Die Fixierung der Drehlager 7 und 8 an der Karosserie des Kraftfahrzeugs ist in Fig. 1 durch die mit der Bezugsziffer 9 gekennzeichneten Symbole dargestellt.

Der Stabilisator 3 des ersten Ausführungsbeispiels gemäß Fig. 1 ist an der Karosserie des Kraftfahrzeugs verdrehsicher fixiert. Hierzu verfügt der Stabilisator 3 im Abschnitt 6 über eine Kröpfung 10. Die Kröpfung 10 verläuft parallel sowie axial versetzt zum übrigen Abschnitt 6 des Stabilisators 3. An der Kröpfung 10 greift gemäß Fig. 1 ein Drehlager 11 an, das im Sinne des Symbols 9 an der Karosserie des Kraftfahrzeugs fixiert ist. Durch die axiale Versetzung der Kröpfung 10 gegenüber den übrigen Abschnitten 6 des Stabilisators 3 und die Führung des Abschnitts 6 sowie der Kröpfung 10 mithilfe der Drehlager 7, 8 und 11 ist der Stabilisator 3 demnach unverdrehbar, d.h. verdrehsicher, an der Karosserie des Kraftfahrzeugs fixiert. Es liegt weiterhin im Sinne des ersten Ausführungsbeispiels, dass an den freien Enden der Schenkel 4 und 5 des Stabilisators 3 jeweils eine Stelleinrichtung 12 bzw. 13 angelenkt ist. Über erste Gelenke 14 sind die Stelleinrichtungen 12 und 13 an die freien Enden der Schenkel 4 und 5 des Stabilisators 3 befestigt. Mit zweiten Gelenken 15 greifen die Stelleinrichtungen 12, 13 an den Rädern, nämlich an den Rädern zugeordneten, nicht-dargestellten Federungseinrichtungen, an. Die Stelleinrichtungen 12 und 13 sind demnach einerseits gelenkig mit den freien Enden der Schenkel 4, 5 des Stabilisators 3 und andererseits gelenkig mit den Rädern bzw. mit den Rädern zugeordneten Federungseinrichtungen verbunden. Im Bereich jedes Rads bzw. für jedes Rad ist demnach eine Stelleinrichtungen angeordnet.

Im Sinne der Fig. 1 sind die Stelleinrichtungen 12 und 13 als Linearzylinder ausgebildet. Die Linearzylinder können als Hydraulikzylinder, Pneumatikzylinder oder elektrische Aktuatoren ausgebildet sein. Über eine entsprechende Ansteuerung der Stelleinrichtungen 12, 13 ist eine Niveauänderung für das Kraftfahrzeug realisierbar. Die Stelleinrichtungen 12 und 13 bilden einen zweiten Lastpfad zusätzlich zu den den Rädern zugeordneten Federungseinrichtungen. Die Stelleinrichtungen 12, 13 nehmen demnach einen Anteil des Leergewichts sowie einen Anteil einer entsprechenden Zuladung des Kraftfahrzeugs auf. In diesem Fall sind die Stelleinrichtungen 12 und 13 teiltragend. Wird auf die den Rädern zugeordneten Federungseinrichtungen verzichtet und die gesamte Last des Kraftfahrzeugs von den Stelleinrichtungen 12 und 13 aufgenommen, so sind dieselben volltragend.

Fig. 2 zeigt ein zweites Ausführungsbeispiel eines Fahrwerks 16 bzw. einer Radaufhängungseinrichtung 17 des Fahrwerks 16 im Bereich der Vorderräder. So umfasst auch die Radaufhängungseinrichtung 17 einen Stabilisator 18, der sich jedoch im Unterschied zum Ausführungsbeispiel der Fig. 1 nicht durchgehend und damit einstückig zwischen den aufzuhängenden Rädern erstreckt, sondern der vielmehr geteilt bzw. unterbrochen ausgebildet ist. Durch diese Teilung bzw. Unterbrechung des Stabilisators 18 des Ausführungsbeispiels gemäß Fig. 2 wird dieser in zwei Elemente 19 und 20 mit Drehfedereigenschaften, nämlich in sogenannte Drehfederstäbe, unterteilt. Die beiden Elemente 19 und 20 verfügen im Wesentlichen über eine L-förmige Gestalt. An ersten Enden 21, die aus dem unterbrochenen Abschnitt des Stabilisators gebildet sind, sind im Ausführungsbeispiel der Fig. 2 die Elemente 19 und 20 in Drehlagern 23 geführt und über Gelenke 24 und 25 an der Karosserie des Kraftfahrzeugs angelenkt. An zweiten Enden der Elemente 19, 20, die durch die parallel zueinander verlaufenden Schenkel des Stabilisators gebildet werden, sind in Analogie zum Ausführungsbeispiel der Fig. 1 Stelleinrichtungen 12, 13 über Gelenke befestigt. Zur Vermeidung von Wiederholungen werden für gleiche Baugruppen gleiche Bezugsziffern verwendet.

Fig. 3 zeigt für das Ausführungsbeispiel der Erfindung wiederum ein Fahrwerk 26 bzw. eine Radaufhängungseinrichtung 27 für die Vorderräder des Kraftfahrzeugs. Das Ausführungsbeispiel gemäß Fig. 3 entspricht im Wesentlichen dem Ausführungsbeispiel gemäß Fig. 2. Daher werden auch hier zur Vermeidung von Wiederholungen für gleiche Baugruppen gleiche Bezugsziffern verwendet. So unterscheidet sich das dritte Ausführungsbeispiel gemäß Fig. 3 vom zweiten Ausführungsbeispiel gemäß Fig. 2 im Wesentlichen dadurch, dass die beiden ersten Enden 21 der Elemente 19, 20 verlängert ausgebildet sind. Die beiden ersten Enden 21 der beiden Elemente 19, 20 erstrecken sich über die gesamte Breite zwischen den beiden aufzuhängenden Rädern. Durch die Verlängerung der ersten Enden 21 der Elemente 19 und 20 werden dieselben elastischer, d.h. weniger steif. Die Drehfedereigenschaften werden demnach durch die Verlängerung der Enden 21 verbessert. Eine Verlängerung der Enden 21 kann aus mechanischen Gründen erforderlich sein. Hinsichtlich des weiteren Aufbaus und der Funktionsweise bestehen jedoch keine Unterschiede zum Ausführungsbeispiel der Fig. 2.

Es liegt im Sinne der hier vorliegenden Erfindung, dass sowohl die Radaufhängungseinrichtung der Vorderräder als auch eine Radaufhängungseinrichtung für die Hinterräder des Kraftfahrzeugs im obigen Sinne ausgebildet sind. In diesem Fall ist jedem Rad des Kraftfahrzeugs, also den beiden Vorderrädern und den beiden Hinterädern, jeweils eine Stelleinrichtung zugeordnet, die im Sinne des erfindungsgemäßen Ausführungsbeispiels in das Kraftfahrzeug integriert sind.

Im Sinne der Erfindung wird weiterhin ein Niveauregulierungssystem vorgeschlagen, das auf dem oben geschilderten Fahrwerk 26 oder der oben dargestellten Radaufhängungseinrichtung 27 basiert. Bei einem derartigen Niveauregulierungssystem, bei welcher sowohl die Aufhängung der Vorderräder als auch die Aufhängung der Hinterräder über derartige Radaufhängungseinrichtungen erfolgt, sind die Stelleinrichtungen mit einer nicht-dargestellten Steuer- bzw. Regeleinrichtung verbunden. Weiterhin sind mit dieser Steuer- bzw. Regeleinrichtung Sensoren, nämlich Höhensensoren und/oder Geschwindigkeitssensoren und gegebenenfalls weitere Sensoren verbunden. Diese Sensoren stellen der Steuer- bzw. Regeleinrichtung als Eingangsgrößen Messwerte bereit. Abhängig von diesen Messwerten und einem in der Steuer- bzw. Regeleinrichtung implementierten Regelgesetz werden Ausgangsgrößen generiert, die den Stelleinrichtungen als Eingangsgrößen bzw. Stellsignale zugeführt werden. Insbesondere ist mit einem derartigen Niveauregulierungssystems ein aktiver Nickausgleich und/oder Wankausgleich für das Kraftfahrzeug realisierbar.

Das erfindungsgemäße Fahrwerk zeichnet sich durch einen einfachen und damit kostengünstigen Aufbau aus. Es ist auf einfache Art und Weise in ein Kraftfahrzeug integrierbar. Die Niveauänderung des Kraftfahrzeugs kann entweder stufenlos oder abgestuft erfolgen. Abhängig von Geschwindigkeitswerten, Beschleunigungswerten oder Verzögerungswerten des Kraftfahrzeugs kann zur Verringerung des Kraftstoffverbrauchs und/oder zur Erhöhung der Fahrsicherheit eine Niveauänderung und/oder ein Wankausgleich und/oder Nickausgleich des Kraftfahrzeugs durchgeführt werden.

### Bezugszeichenliste

- Fahrwerk: 1
- Radaufhängungseinrichtung: 2
- Stabilisator: 3
- Schenkel: 4
- Schenkel: 5
- Abschnitt: 6
- Drehlager: 7
- Drehlager: 8
- Symbol: 9
- Kröpfung: 10
- Drehlager: 11
- Stelleinrichtung: 12
- Stelleinrichtung: 13
- Gelenk: 14
- Gelenk: 15
- Fahrwerk: 16
- Radaufhängungseinrichtung: 17
- Stabilisator: 18
- Element: 19
- Element: 20
- Ende: 21
- Ende: 22
- Drehlager: 23
- Gelenk: 24
- Gelenk: 25
- Fahrwerk: 26
- Radaufhängungseinrichtung: 27

## Patentansprüche

1. Fahrwerk für ein Kraftfahrzeug, mit mindestens einer Radaufhängungseinrichtung (27) für jeweils zwei sich gegenüberliegende Räder, wobei die oder jede Radaufhängungseinrichtung (27) einen Stabilisator (3) oder mindestens ein Element (19, 20) mit Drehfedereigenschaften aufweist, wobei der Stabilisator (3) oder das oder jedes Element (19, 20) zwischen den sich gegenüberliegenden Rädern angeordnet und an einer Karosserie des Kraftfahrzeugs fixiert ist, und dass am Stabilisator (3) oder an dem oder jedem Element (19, 20) mit Drehfedereigenschaften für jedes Rad mindestens eine Stelleinrichtung (12, 13) zur Gewährleistung einer Niveauänderung des Kraftfahrzeugs angreift, **dadurch gekennzeichnet, dass** der Stabilisator zur Bildung zweier Elemente (19, 20) mit Drehfedereigenschaften geteilt bzw. unterbrochen ist, wobei jedes Element (19, 20) mit einem ersten Ende (21) an der Karosserie des Kraftfahrzeugs angelenkt ist, und wobei zweite Enden (22) der Elemente über jeweils eine Stelleinrichtung (12, 13) mit jeweils einem Rad gelenkig verbunden sind, sowie die beiden ersten Enden (21) der beiden Elemente (19, 20) derart verlängert sind, dass sich beide Elemente (19, 20) zur Verbessung der Drehfedereigenschaften über die gesamte Breite zwischen den beiden aufzuhängenden Rädern erstrecken.

2. Fahrwerk nach Anspruch 1, **dadurch gekennzeichnet, dass** die zweiten Enden (22) der Elemente über jeweils eine Stelleinrichtung (12, 13) mit einer dem jeweiligen Rad zugeordneten Federungseinrichtung gelenkig verbunden sind.

3. Fahrwerk nach Anspruch 1 oder 2, **dadurch gekennzeichnet, dass** sowohl für die Vorderradaufhängung als auch für die Hinterradaufhängung jeweils eine derartige Radaufhängungseinrichtung vorhanden ist.

4. Fahrwerk nach einem oder mehreren der Ansprüche 1 bis 3, **dadurch gekennzeichnet, dass** jede Stelleinrichtung (12, 13) mit einer Steuer- bzw. Regeleinrichtung verbunden ist, die als Ausgangsgrößen Stellsignale für die Stelleinrichtungen erzeugt.

5. Fahrwerk nach Anspruch 4, **dadurch gekennzeichnet, dass** die Steuer- bzw. Regeleinrichtung mit Sensoren, insbesondere mit mindestens einem Höhensensor und/oder einem Geschwindigkeitssensor und/oder einem Beschleunigungssensor, verbunden ist, deren Messwerte Eingangsgrößen für die Steuer- bzw. Regeleinrichtung sind.

6. Fahrwerk nach Anspruch 4 oder 5, **dadurch gekennzeichnet, dass** die Steuer- bzw. Regeleinrichtung durch eine entsprechende Ansteuerung der oder jeder Stelleinrichtung für einen Nickausgleich und/oder Wankausgleich des Kraftfahrzeugs sorgt.

## Claims

1. A chassis for a motor vehicle, comprising at least one suspension device (27) for two wheels disposed opposite of one another, with the suspension device (27), or each thereof, having a stabilizer (3) or at least one element (19, 20) with torsion spring properties, with the stabilizer (3) or the element (19, 20), or each thereof, being arranged between the mutually opposite wheels and being fixed to a body of the motor vehicle, and at least one adjusting device (12, 13) for ensuring a change in the level of the motor vehicle acts upon the stabilizer (3) or on the element (19, 20), or each thereof, with torsion spring properties for each wheel, **characterized in that** the stabilizer is divided or interrupted for forming two elements (19, 20) with torsion spring properties, with each element (19, 20) being linked with a first end (21) to the body of the motor vehicle, and with second ends (22) of the elements being connected in an articulated manner with one wheel each via one adjusting device (12, 13) each, and the two first ends (21) of the two elements (19, 20) are extended in such a way that both elements (19, 20) extend over the entire width between the two wheels to be suspended for the purpose of improving the torsion spring properties.

2. A chassis according to claim 1, **characterized in that** the second ends (22) of the elements are connected in an articulated manner via one adjusting device (12, 13) each with a suspension device associated with the respective wheel.

3. A chassis according to claim 1 or 2, **characterized in that** one such suspension device each is present both for the front-wheel suspension and the rear-wheel suspension.

4. A chassis according to one or several of the claims 1 to 3, **characterized in that** each adjusting device (12, 13) is connected with a control or feedback control device which generates actuating signals for the adjusting devices as output quantities.

5. A chassis according to claim 4, **characterized in that** the control or feedback control device is connected with sensors, especially with at least one height sensor and/or a speed sensor and/or an acceleration sensor, the measured values of which are input quantities for the control or feedback control device.

6. A chassis according to claim 4 or 5, **characterized in that** the control or feedback control device ensures a pitching and/or rolling compensation of the motor vehicle by respective control of the or each adjusting device.

## Revendications

1. Châssis pour un véhicule à moteur avec au moins un dispositif de suspension des roues (27) pour chaque paire de roues se faisant face, le ou chaque dispositif de suspension des roues (27) comprenant un stabilisateur (3) ou au moins un élément (19, 20) ayant des propriétés d'élasticité en torsion, le stabilisateur (3) ou le ou chaque élément (19, 20) étant disposé entre les roues qui se font face et fixé sur une carrosserie du véhicule à moteur et au moins un dispositif d'ajustement (12, 13) se mettant en prise sur le stabilisateur (3) ou sur le ou chaque élément (19, 20) ayant les propriétés d'élasticité en torsion pour chaque roue afin de garantir un changement de niveau du véhicule à moteur, **caractérisé en ce que** le stabilisateur est partagé ou interrompu pour former deux éléments (19, 20) ayant les propriétés d'élasticité en torsion, chaque élément (19, 20) étant articulé à une première extrémité (21) sur la carrosserie du véhicule à moteur et les deuxièmes extrémités (22) des éléments étant chacune reliée de façon articulée à une roue par l'intermédiaire d'un dispositif d'ajustement (12, 13) et les deux premières extrémités (21) des deux éléments (19, 20) étant allongées de telle façon que les deux éléments (19, 20) s'étendent sur toute la largeur entre les roues à suspendre afin d'améliorer les propriétés d'élasticité en torsion.

2. Châssis selon la revendication 1, **caractérisé en ce que** les deuxièmes extrémités (22) des éléments sont reliées chacune de façon articulée par l'intermédiaire d'un dispositif d'amortissement (12, 13) à un dispositif de suspension associé à la roue correspondante.

3. Châssis selon la revendication 1 ou 2, **caractérisé en ce qu'**un tel dispositif de suspension des roues est prévu aussi bien pour la suspension des roues avant que pour la suspension des roues arrière.

4. Châssis selon l'une des revendications 1 à 3, **caractérisé en ce que** chaque dispositif d'ajustement (12, 13) est relié à un dispositif de commande et de régulation qui génère comme grandeurs de sortie des signaux d'ajustement pour les dispositifs d'ajustement.

5. Châssis selon la revendication 4, **caractérisé en ce que** le dispositif de commande et de régulation est relié à des capteurs, en particulier avec au moins un capteur de hauteur et/ou un capteur de vitesse et/ou un capteur d'accélération, dont les valeurs de mesure constituent les grandeurs d'entrée pour le dispositif de commande et de régulation.

6. Châssis selon la revendication 4 ou 5, **caractérisé en ce que** le dispositif de commande et de régulation assure, par une activation du ou de chaque dispositif d'ajustement, la compensation du tangage et/ou du roulis du véhicule à moteur.
